# EUROPEAN PATENT APPLICATION

(11) **EP 4 475 509 A1**
(43) Date of publication of application: **11.12.2024**
(21) Application number: 23212227.5
(22) Date of filing: 27.11.2023
(51) Int. Cl.: H04L 43/103

(54) **EFFICIENT TIME-SYNCHRONIZATION IN WIRELESS TIME-SENSITIVE NETWORKS USING TRIGGER-BASED NEGOTIATION FOR MIXED POLLING AND NON-POLLING OPERATION**

(30) Priority: 09.06.2023 US 202318207990
(71) Applicant: INTEL Corporation, Santa Clara, CA 95054 (US)
(72) Inventor: PEREZ-RAMIREZ, Javier, North Plains, OR, 97133 (US); DAS, Dibakar, Hillsboro, OR, 97123 (US); CAVALCANTI, Dave A., Portland, OR, 97229 (US); SEGEV, Yonathan, Sunnyvale, CA, 94087 (US)
(74) Representative: Viering, Jentschura & Partner mbB Patent- und Rechtsanwälte

(57) **Abstract**

A station (STA), when operating as a responding STA (RSTA) for time-synchronization of a plurality of initiating STAs (ISTAs) in a time-synchronized network (TSN), may determine, during a negotiation phase, whether each of the ISTAs that intend to participate in one or more measurement phases are requesting to be polled or are requesting not to be polled. For the ISTAs that are requesting to be polled, the RSTA may perform a polling phase prior to performing each of the one or more measurement phases. For the ISTAs that are requesting not to be polled, the RSTA may refrain from performing a polling phase prior to performing each of the one or more measurement phases. The RSTA can directly trigger the measurement phase for ISTAs that are requesting not to be polled. By grouping ISTAs into polling and non-polling groups, efficiency improvements are achieved.

## Description

### TECHNICAL FIELD

Embodiments pertain to wireless communications. Some embodiments relate to wireless networks including wireless local area networks (WLANS) including those operating in accordance with the IEEE 802.11 standards. Some embodiments relate to wireless time-sensitive networks (TSN) and wireless time-sensitive networking (WTSN).

### BACKGROUND

Emerging time-sensitive (TS) applications represent new markets for Wi-Fi. Industrial automation, robotics, AR/VR and HMIs (Human-Machine Interface) are example applications. Many time-sensitive applications require ultra-low latency (ULL) with minimal queuing and medium access delay within a wireless system. For instance, Programable Logic Controller (PLCs) may execute control loops requiring isochronous (cyclic) transmission of small time-critical (TC) packets (typically a few bytes) with cycles of 10's of microseconds. Furthermore, applications that need ULL typically also require very high reliability. The ULL requirement for TC packets practically imposes very high reliability requirements as multiple retransmissions (following the typical Wi-Fi protocols) are not feasible.

One issue with time-sensitive networks is the accuracy of time-synchronization. For example, the implementation of some of the IEEE standards such as IEEE 802.1AS - Timing and Synchronization for Time-Sensitive Applications, single digit micro-second (µs) accuracy may be needed for stations (STA) associated to an access point (AP). Thus there are general needs for efficient time-synchronization processes suitable for use with time-sensitive networking.

### BRIEF DESCRIPTION OF THE DRAWINGS

FIG. 1 is a block diagram of a radio architecture, in accordance with some embodiments.
FIG. 2 illustrates a front-end module circuitry for use in the radio architecture of FIG. 1, in accordance with some embodiments.
FIG. 3 illustrates a radio IC circuitry for use in the radio architecture of FIG. 1, in accordance with some embodiments.
FIG. 4 illustrates a baseband processing circuitry for use in the radio architecture of FIG. 1, in accordance with some embodiments.
FIG. 5 illustrates a WLAN, in accordance with some embodiments.
FIG. 6 illustrates a wireless communication device, in accordance with some embodiments.
FIG. 7 illustrates overhead signalling savings for networks with more than twenty STAs per BSS, in accordance with some embodiments.
FIG. 8A illustrates trigger-based (TB) polling, sounding and reporting phases, in accordance with some embodiments.
FIG. 8B illustrates a negotiation phase and a measurement phase that includes a TB ranging availability window with two instances of polling/sounding/reporting triplets in separate transmission opportunities (TXOPs), in accordance with some embodiments.
FIG. 8C illustrates a TB ranging availability window with two instances of polling/sounding/reporting triplets in a single TXOP, in accordance with some embodiments.
FIG. 8D illustrates a TB ranging availability window with two instances of polling/sounding/reporting triplets in separate TXOPs, in accordance with some embodiments.
FIG. 9A illustrates trigger-based polling, sounding and reporting phase mixing of polled and non-polled devices, in accordance with some embodiments.
FIG. 9B illustrates trigger-based polling free, sounding and reporting phases for non-polled devices, in accordance with some embodiments.
FIG. 10 illustrates a Ranging Parameters Field format, in accordance with some embodiments.
FIG. 11 illustrates periodic non polling ISTA sounding, in accordance with some embodiments.
FIG. 12 illustrates a Ranging Subelements field format, in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

Some embodiments disclosed herein are directed to efficient time-synchronization in wireless time-sensitive networks (TSNs) using trigger-based (TB) negotiation for mixed polling and non-polling operation. Some embodiments are directed to a station (STA). In these embodiments, when operating as a responding STA (RSTA) for time-synchronization of a plurality of initiating STAs (ISTAs) in a time-synchronized network (TSN), the RSTA may determine, during a negotiation phase, whether each of the ISTAs that intend to participate in one or more measurement phases are requesting to be polled or are requesting not to be polled. In these embodiments, for the ISTAs that are requesting to be polled, the RSTA may perform a polling phase prior to performing each of the one or more measurement phases. In these embodiments, for the ISTAs that are requesting not to be polled, the RSTA may refrain from performing a polling phase prior to performing each of the one or more measurement phases. In these embodiments, the RSTA can directly trigger the measurement phase for ISTAs that are requesting not to be polled. Thus by grouping ISTAs into polling and non-polling groups, efficiency improvements are achieved. These embodiments, as well as others, are described in more detail below.

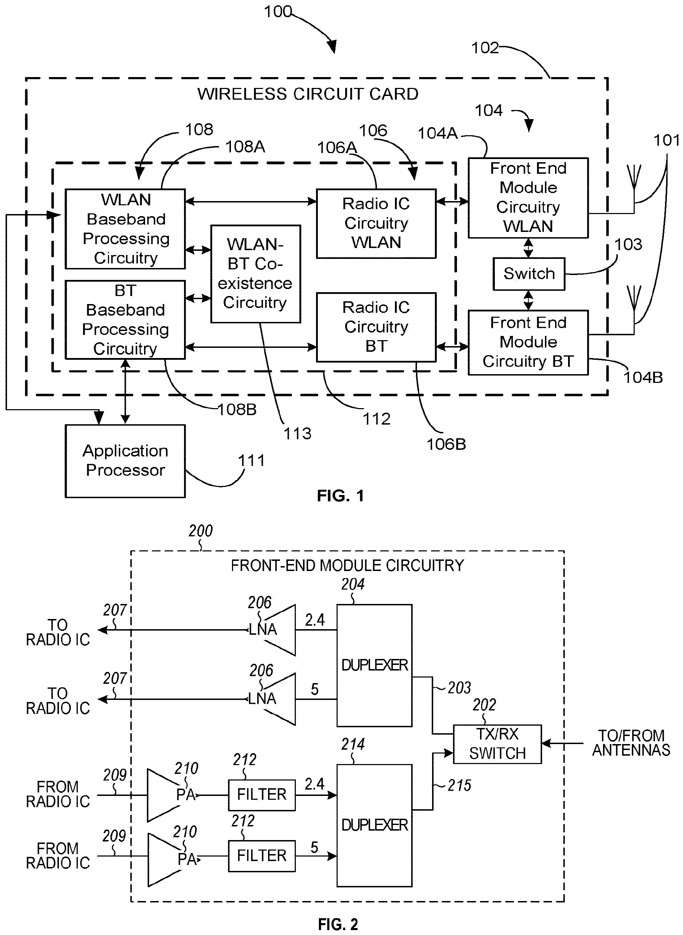

FIG. 1 is a block diagram of a radio architecture 100 in accordance with some embodiments. Radio architecture 100 may include radio front-end module (FEM) circuitry 104, radio IC circuitry 106 and baseband processing circuitry 108. Radio architecture 100 as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 104 may include a WLAN or Wi-Fi FEM circuitry 104A and a Bluetooth (BT) FEM circuitry 104B. The WLAN FEM circuitry 104A may include a receive signal path comprising circuitry configured to operate on WLAN RF signals received from one or more antennas 101, to amplify the received signals and to provide the amplified versions of the received signals to the WLAN radio IC circuitry 106A for further processing. The BT FEM circuitry 104B may include a receive signal path which may include circuitry configured to operate on BT RF signals received from one or more antennas 101, to amplify the received signals and to provide the amplified versions of the received signals to the BT radio IC circuitry 106B for further processing. FEM circuitry 104A may also include a transmit signal path which may include circuitry configured to amplify WLAN signals provided by the radio IC circuitry 106A for wireless transmission by one or more of the antennas 101. In addition, FEM circuitry 104B may also include a transmit signal path which may include circuitry configured to amplify BT signals provided by the radio IC circuitry 106B for wireless transmission by the one or more antennas. In the embodiment of FIG. 1, although FEM CIRCUITRY 104A and FEM CIRCUITRY 104B are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 106 as shown may include WLAN radio IC circuitry 106A and BT radio IC circuitry 106B. The WLAN radio IC circuitry 106A may include a receive signal path which may include circuitry to down-convert WLAN RF signals received from the FEM circuitry 104A and provide baseband signals to WLAN baseband processing circuitry 108A. BT radio IC circuitry 106B may in turn include a receive signal path which may include circuitry to down-convert BT RF signals received from the FEM circuitry 104B and provide baseband signals to BT baseband processing circuitry 108B. WLAN radio IC circuitry 106A may also include a transmit signal path which may include circuitry to up-convert WLAN baseband signals provided by the WLAN baseband processing circuitry 108A and provide WLAN RF output signals to the FEM circuitry 104A for subsequent wireless transmission by the one or more antennas 101. BT radio IC circuitry 106B may also include a transmit signal path which may include circuitry to up-convert BT baseband signals provided by the BT baseband processing circuitry 108B and provide BT RF output signals to the FEM circuitry 104B for subsequent wireless transmission by the one or more antennas 101. In the embodiment of FIG. 1, although radio IC circuitries 106A and 106B are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuitry 108 may include a WLAN baseband processing circuitry 108A and a BT baseband processing circuitry 108B. The WLAN baseband processing circuitry 108A may include a memory, such as, for example, a set of RAM arrays in a Fast Fourier Transform or Inverse Fast Fourier Transform block (not shown) of the WLAN baseband processing circuitry 108A. Each of the WLAN baseband circuitry 108A and the BT baseband circuitry 108B may further include one or more processors and control logic to process the signals received from the corresponding WLAN or BT receive signal path of the radio IC circuitry 106, and to also generate corresponding WLAN or BT baseband signals for the transmit signal path of the radio IC circuitry 106. Each of the baseband processing circuitries 108A and 108B may further include physical layer (PHY) and medium access control layer (MAC) circuitry and may further interface with application processor 111 for generation and processing of the baseband signals and for controlling operations of the radio IC circuitry 106.

Referring still to FIG. 1, according to the shown embodiment, WLAN-BT coexistence circuitry 113 may include logic providing an interface between the WLAN baseband circuitry 108A and the BT baseband circuitry 108B to enable use cases requiring WLAN and BT coexistence. In addition, a switch 103 may be provided between the WLAN FEM circuitry 104A and the BT FEM circuitry 104B to allow switching between the WLAN and BT radios according to application needs. In addition, although the antennas 101 are depicted as being respectively connected to the WLAN FEM circuitry 104A and the BT FEM circuitry 104B, embodiments include within their scope the sharing of one or more antennas as between the WLAN and BT FEMs, or the provision of more than one antenna connected to each of FEM CIRCUITRY 104A or 104B.

In some embodiments, the front-end module circuitry 104, the radio IC circuitry 106, and baseband processing circuitry 108 may be provided on a single radio card, such as wireless radio card 102. In some other embodiments, the one or more antennas 101, the FEM circuitry 104 and the radio IC circuitry 106 may be provided on a single radio card. In some other embodiments, the radio IC circuitry 106 and the baseband processing circuitry 108 may be provided on a single chip or integrated circuit (IC), such as IC 112.

In some embodiments, the wireless radio card 102 may include a WLAN radio card and may be configured for Wi-Fi communications, although the scope of the embodiments is not limited in this respect. In some of these embodiments, the radio architecture 100 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 100 may be part of a Wi-Fi communication station (STA) such as a wireless access point (AP), a base station or a mobile device including a Wi-Fi device. In some of these embodiments, radio architecture 100 may be configured to transmit and receive signals in accordance with specific communication standards and/or protocols, such as any of the Institute of Electrical and Electronics Engineers (IEEE) standards including, IEEE 802.11n-2009, IEEE 802.11-2012, IEEE 802.11-2016, , IEEE 802.11ac, IEEE 802.11ax, and/or IEEE P802.11be standards and/or proposed specifications for WLANs, although the scope of embodiments is not limited in this respect. Radio architecture 100 may also be suitable to transmit and/or receive communications in accordance with other techniques and standards.

In some embodiments, the radio architecture 100 may be configured for high-efficiency (HE) Wi-Fi (HEW) communications in accordance with the IEEE 802.11ax standard. In some embodiments, the radio architecture 100 may be configured for Extremely High Throughput (EHT) communications in accordance with the IEEE 802.11be standard. In these embodiments, the radio architecture 100 may be configured to communicate in accordance with an OFDMA technique, although the scope of the embodiments is not limited in this respect. In some embodiments, the radio architecture 100 may be configured for next generation vehicle-to-everything (NGV) communications in accordance with the IEEE 802.11bd standard and one or more stations including AP 502 may be next generation vehicle-to-everything (NGV) stations (STAs).

In some other embodiments, the radio architecture 100 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1, the BT baseband circuitry 108B may be compliant with a Bluetooth (BT) connectivity standard such as Bluetooth, Bluetooth 4.0 or Bluetooth 5.0, or any other iteration of the Bluetooth Standard. In embodiments that include BT functionality as shown for example in Fig. 1, the radio architecture 100 may be configured to establish a BT synchronous connection oriented (SCO) link and/or a BT low energy (BT LE) link. In some of the embodiments that include functionality, the radio architecture 100 may be configured to establish an extended SCO (eSCO) link for BT communications, although the scope of the embodiments is not limited in this respect. In some of these embodiments that include a BT functionality, the radio architecture may be configured to engage in a BT Asynchronous Connection-Less (ACL) communications, although the scope of the embodiments is not limited in this respect. In some embodiments, as shown in FIG. 1, the functions of a BT radio card and WLAN radio card may be combined on a single wireless radio card, such as single wireless radio card 102, although embodiments are not so limited, and include within their scope discrete WLAN and BT radio cards.

In some embodiments, the radio architecture 100 may include other radio cards, such as a cellular radio card configured for cellular (e.g., 3GPP such as LTE, LTE-Advanced or 5G communications).

In some IEEE 802.11 embodiments, the radio architecture 100 may be configured for communication over various channel bandwidths including bandwidths having center frequencies of about 900 MHz, 2.4 GHz, 5 GHz, and bandwidths of about 1 MHz, 2 MHz, 2.5 MHz, 4 MHz, 5MHz, 8 MHz, 10 MHz, 16 MHz, 20 MHz, 40MHz, 80MHz (with contiguous bandwidths) or 80+80MHz (160MHz) (with non-contiguous bandwidths). In some embodiments, a 320 MHz channel bandwidth may be used. The scope of the embodiments is not limited with respect to the above center frequencies however.

FIG. 2 illustrates FEM circuitry 200 in accordance with some embodiments. The FEM circuitry 200 is one example of circuitry that may be suitable for use as the WLAN and/or BT FEM circuitry 104A/104B (FIG. 1), although other circuitry configurations may also be suitable.

In some embodiments, the FEM circuitry 200 may include a TX/RX switch 202 to switch between transmit mode and receive mode operation. The FEM circuitry 200 may include a receive signal path and a transmit signal path. The receive signal path of the FEM circuitry 200 may include a low-noise amplifier (LNA) 206 to amplify received RF signals 203 and provide the amplified received RF signals 207 as an output (e.g., to the radio IC circuitry 106 (FIG. 1)). The transmit signal path of the circuitry 200 may include a power amplifier (PA) to amplify input RF signals 209 (e.g., provided by the radio IC circuitry 106), and one or more filters 212, such as band-pass filters (BPFs), low-pass filters (LPFs) or other types of filters, to generate RF signals 215 for subsequent transmission (e.g., by one or more of the antennas 101 (FIG. 1)).

In some dual-mode embodiments for Wi-Fi communication, the FEM circuitry 200 may be configured to operate in either the 2.4 GHz frequency spectrum or the 5 GHz frequency spectrum. In these embodiments, the receive signal path of the FEM circuitry 200 may include a receive signal path duplexer 204 to separate the signals from each spectrum as well as provide a separate LNA 206 for each spectrum as shown. In these embodiments, the transmit signal path of the FEM circuitry 200 may also include a power amplifier 210 and a filter 212, such as a BPF, a LPF or another type of filter for each frequency spectrum and a transmit signal path duplexer 214 to provide the signals of one of the different spectrums onto a single transmit path for subsequent transmission by the one or more of the antennas 101 (FIG. 1). In some embodiments, BT communications may utilize the 2.4 GHZ signal paths and may utilize the same FEM circuitry 200 as the one used for WLAN communications.

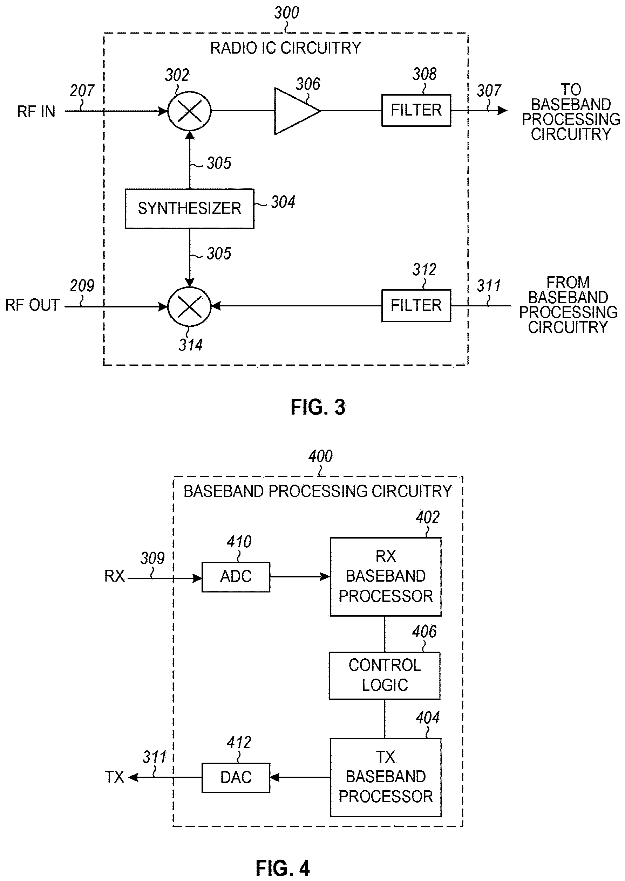

FIG. 3 illustrates radio IC circuitry 300 in accordance with some embodiments. The radio IC circuitry 300 is one example of circuitry that may be suitable for use as the WLAN or BT radio IC circuitry 106A/106B (FIG. 1), although other circuitry configurations may also be suitable.

In some embodiments, the radio IC circuitry 300 may include a receive signal path and a transmit signal path. The receive signal path of the radio IC circuitry 300 may include at least mixer circuitry 302, such as, for example, down-conversion mixer circuitry, amplifier circuitry 306 and filter circuitry 308. The transmit signal path of the radio IC circuitry 300 may include at least filter circuitry 312 and mixer circuitry 314, such as, for example, up-conversion mixer circuitry. Radio IC circuitry 300 may also include synthesizer circuitry 304 for synthesizing a frequency 305 for use by the mixer circuitry 302 and the mixer circuitry 314. The mixer circuitry 302 and/or 314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. Fig. 3 illustrates only a simplified version of a radio IC circuitry, and may include, although not shown, embodiments where each of the depicted circuitries may include more than one component. For instance, mixer circuitry 320 and/or 314 may each include one or more mixers, and filter circuitries 308 and/or 312 may each include one or more filters, such as one or more BPFs and/or LPFs according to application needs. For example, when mixer circuitries are of the direct-conversion type, they may each include two or more mixers.

In some embodiments, mixer circuitry 302 may be configured to down-convert RF signals 207 received from the FEM circuitry 104 (FIG. 1) based on the synthesized frequency 305 provided by synthesizer circuitry 304. The amplifier circuitry 306 may be configured to amplify the down-converted signals and the filter circuitry 308 may include a LPF configured to remove unwanted signals from the down-converted signals to generate output baseband signals 307. Output baseband signals 307 may be provided to the baseband processing circuitry 108 (FIG. 1) for further processing. In some embodiments, the output baseband signals 307 may be zero-frequency baseband signals, although this is not a requirement. In some embodiments, mixer circuitry 302 may comprise passive mixers, although the scope of the embodiments is not limited in this respect.

In some embodiments, the mixer circuitry 314 may be configured to up-convert input baseband signals 311 based on the synthesized frequency 305 provided by the synthesizer circuitry 304 to generate RF output signals 209 for the FEM circuitry 104. The baseband signals 311 may be provided by the baseband processing circuitry 108 and may be filtered by filter circuitry 312. The filter circuitry 312 may include a LPF or a BPF, although the scope of the embodiments is not limited in this respect.

In some embodiments, the mixer circuitry 302 and the mixer circuitry 314 may each include two or more mixers and may be arranged for quadrature down-conversion and/or up-conversion respectively with the help of synthesizer circuitry 304. In some embodiments, the mixer circuitry 302 and the mixer circuitry 314 may each include two or more mixers each configured for image rejection (e.g., Hartley image rejection). In some embodiments, the mixer circuitry 302 and the mixer circuitry 314 may be arranged for direct down-conversion and/or direct up-conversion, respectively. In some embodiments, the mixer circuitry 302 and the mixer circuitry 314 may be configured for super-heterodyne operation, although this is not a requirement.

Mixer circuitry 302 may comprise, according to one embodiment: quadrature passive mixers (e.g., for the in-phase (I) and quadrature phase (Q) paths). In such an embodiment, RF input signal 207 from Fig. 3 may be down-converted to provide I and Q baseband output signals to be sent to the baseband processor

Quadrature passive mixers may be driven by zero and ninety-degree time-varying LO switching signals provided by a quadrature circuitry which may be configured to receive a LO frequency (f_{LO}) from a local oscillator or a synthesizer, such as LO frequency 305 of synthesizer circuitry 304 (FIG. 3). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have a 25% duty cycle and a 50% offset. In some embodiments, each branch of the mixer circuitry (e.g., the in-phase (I) and quadrature phase (Q) path) may operate at a 25% duty cycle, which may result in a significant reduction is power consumption.

The RF input signal 207 (FIG. 2) may comprise a balanced signal, although the scope of the embodiments is not limited in this respect. The I and Q baseband output signals may be provided to low-nose amplifier, such as amplifier circuitry 306 (FIG. 3) or to filter circuitry 308 (FIG. 3).

In some embodiments, the output baseband signals 307 and the input baseband signals 311 may be analog baseband signals, although the scope of the embodiments is not limited in this respect. In some alternate embodiments, the output baseband signals 307 and the input baseband signals 311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 304 may be a fractional-N synthesizer or a fractional N/N+1 synthesizer, although the scope of the embodiments is not limited in this respect as other types of frequency synthesizers may be suitable. For example, synthesizer circuitry 304 may be a delta-sigma synthesizer, a frequency multiplier, or a synthesizer comprising a phase-locked loop with a frequency divider. According to some embodiments, the synthesizer circuitry 304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuitry 304 may be provided by a voltage controlled oscillator (VCO), although that is not a requirement. A divider control input may further be provided by either the baseband processing circuitry 108 (FIG. 1) or application processor 111 (FIG. 1) depending on the desired output frequency 305. In some embodiments, a divider control input (e.g., N) may be determined from a look-up table (e.g., within a Wi-Fi card) based on a channel number and a channel center frequency as determined or indicated by application processor 111.

In some embodiments, synthesizer circuitry 304 may be configured to generate a carrier frequency as the output frequency 305, while in other embodiments, the output frequency 305 may be a fraction of the carrier frequency (e.g., one-half the carrier frequency, one-third the carrier frequency). In some embodiments, the output frequency 305 may be a LO frequency (f_{LO}).

FIG. 4 illustrates a functional block diagram of baseband processing circuitry 400 in accordance with some embodiments. The baseband processing circuitry 400 is one example of circuitry that may be suitable for use as the baseband processing circuitry 108 (FIG. 1), although other circuitry configurations may also be suitable. The baseband processing circuitry 400 may include a receive baseband processor (RX BBP) 402 for processing receive baseband signals 309 provided by the radio IC circuitry 106 (FIG. 1) and a transmit baseband processor (TX BBP) 404 for generating transmit baseband signals 311 for the radio IC circuitry 106. The baseband processing circuitry 400 may also include control logic 406 for coordinating the operations of the baseband processing circuitry 400.

In some embodiments (e.g., when analog baseband signals are exchanged between the baseband processing circuitry 400 and the radio IC circuitry 106), the baseband processing circuitry 400 may include ADC 410 to convert analog baseband signals received from the radio IC circuitry 106 to digital baseband signals for processing by the RX BBP 402. In these embodiments, the baseband processing circuitry 400 may also include DAC 412 to convert digital baseband signals from the TX BBP 404 to analog baseband signals.

In some embodiments that communicate OFDM signals or OFDMA signals, such as through baseband processor 108A,, the transmit baseband processor 404 may be configured to generate OFDM or OFDMA signals as appropriate for transmission by performing an inverse fast Fourier transform (IFFT). The receive baseband processor 402 may be configured to process received OFDM signals or OFDMA signals by performing an FFT. In some embodiments, the receive baseband processor 402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 1, in some embodiments, the antennas 101 (FIG. 1) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 101 may each include a set of phased-array antennas, although embodiments are not so limited.

Although the radio architecture 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

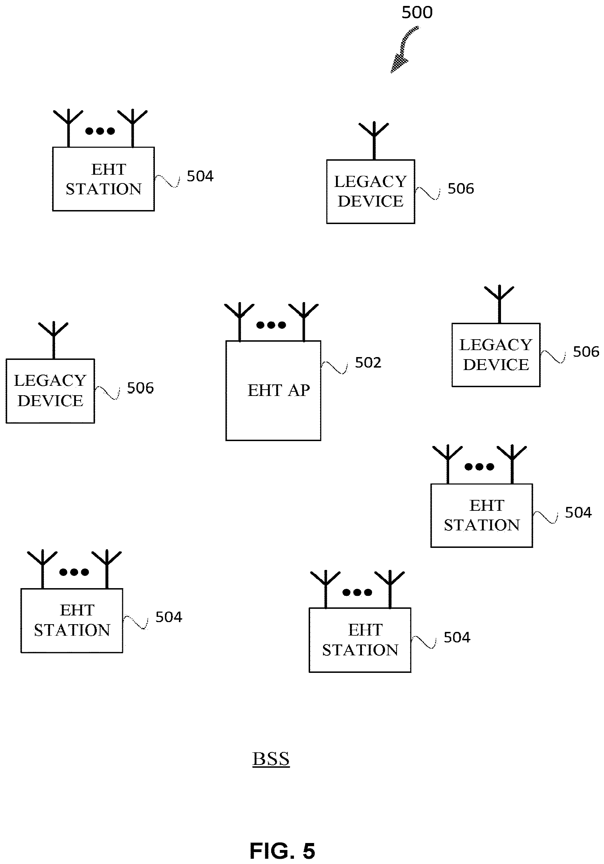

FIG. 5 illustrates a WLAN 500 in accordance with some embodiments. The WLAN 500 may comprise a basis service set (BSS) that may include an access point (AP) 502, which may be an AP, a plurality of stations 504, and a plurality of legacy (e.g., IEEE 802.1 1n/ac/ax) devices 506. In some embodiments, WLAN 500 may be configured for Extremely High Throughput (EHT) communications in accordance with the IEEE 802.11be standard and one or more stations including AP 502 and stations 504 may be EHT STAs. In some embodiments, WLAN 500 may be configured for Ultra-High Rate (UHR) communications in accordance with one of the IEEE 802.11 standards or draft standards and one or more stations including AP 502 and stations 504 may be UHR and/or UHR+ STAs.

In some embodiments, WLAN 500 may be configured for next generation vehicle-to-everything (NGV) communications in accordance with the IEEE 802.11bd standard and one or more stations including AP 502 may be next generation vehicle-to-everything (NGV) stations (STAs).

The AP 502 may be an AP using the IEEE 802.11 to transmit and receive. The AP 502 may be a base station. The AP 502 may use other communications protocols as well as the IEEE 802.11 protocol. The IEEE 802.11 protocol may be IEEE 802.11ax. The IEEE 802.11 protocol may include using orthogonal frequency division multiple-access (OFDMA), time division multiple access (TDMA), and/or code division multiple access (CDMA). The IEEE 802.11 protocol may include a multiple access technique. For example, the IEEE 802.11 protocol may include space-division multiple access (SDMA) and/or multiple-user multiple-input multiple-output (MU-MIMO). There may be more than one AP 502 that is part of an extended service set (ESS). A controller (not illustrated) may store information that is common to the more than one APs 502.

The legacy devices 506 may operate in accordance with one or more of IEEE 802.11 a/b/g/n/ac/ad/af/ah/aj/ay, or another legacy wireless communication standard. The legacy devices 506 may be STAs or IEEE STAs. The STAs 504 may be wireless transmit and receive devices such as cellular telephone, portable electronic wireless communication devices, smart telephone, handheld wireless device, wireless glasses, wireless watch, wireless personal device, tablet, or another device that may be transmitting and receiving using the IEEE 802.11 protocol such as IEEE 802.11ax or another wireless protocol. In some embodiments, the STAs 504 may be termed high efficiency (HE) stations.

AP 502 may communicate with legacy devices 506 in accordance with legacy IEEE 802.11 communication techniques. In example embodiments, AP 502 may also be configured to communicate with STAs 504 in accordance with legacy IEEE 802.11 communication techniques.

In some embodiments, a frame may be configurable to have the same bandwidth as a channel. The frame may be a physical Layer Convergence Procedure (PLCP) Protocol Data Unit (PPDU). In some embodiments, there may be different types of PPDUs that may have different fields and different physical layers and/or different media access control (MAC) layers.

The bandwidth of a channel may be 20MHz, 40MHz, or 80MHz, 160MHz, 320MHz contiguous bandwidths or an 80+80MHz (160MHz) non-contiguous bandwidth. In some embodiments, the bandwidth of a channel may be 1 MHz, 1.25MHz, 2.03MHz, 2.5MHz, 4.06 MHz, 5MHz and 10MHz, or a combination thereof or another bandwidth that is less or equal to the available bandwidth may also be used. In some embodiments the bandwidth of the channels may be based on a number of active data subcarriers. In some embodiments the bandwidth of the channels is based on 26, 52, 106, 242, 484, 996, or 2x996 active data subcarriers or tones that are spaced by 20 MHz. In some embodiments the bandwidth of the channels is 256 tones spaced by 20 MHz. In some embodiments the channels are multiple of 26 tones or a multiple of 20 MHz. In some embodiments a 20 MHz channel may comprise 242 active data subcarriers or tones, which may determine the size of a Fast Fourier Transform (FFT). An allocation of a bandwidth or a number of tones or sub-carriers may be termed a resource unit (RU) allocation in accordance with some embodiments.

In some embodiments, the 26-subcarrier RU and 52-subcarrier RU are used in the 20 MHz, 40 MHz, 80 MHz, 160 MHz and 80+80 MHz OFDMA PPDU formats. In some embodiments, the 106-subcarrier RU is used in the 20 MHz, 40 MHz, 80 MHz, 160 MHz and 80+80 MHz OFDMA and MU-MIMO PPDU formats. In some embodiments, the 242-subcarrier RU is used in the 40 MHz, 80 MHz, 160 MHz and 80+80 MHz OFDMA and MU-MIMO PPDU formats. In some embodiments, the 484-subcarrier RU is used in the 80 MHz, 160 MHz and 80+80 MHz OFDMA and MU-MIMO PPDU formats. In some embodiments, the 996-subcarrier RU is used in the 160 MHz and 80+80 MHz OFDMA and MU-MIMO PPDU formats.

A frame may be configured for transmitting a number of spatial streams, which may be in accordance with MU-MIMO and may be in accordance with OFDMA. In other embodiments, AP 502, STA 504, and/or legacy device 506 may also implement different technologies such as code division multiple access (CDMA) 2000, CDMA 2000 1X, CDMA 2000 Evolution-Data Optimized (EV-DO), Interim Standard 2000 (IS-2000), Interim Standard 95 (IS-95), Interim Standard 856 (IS-856), Long Term Evolution (LTE), Global System for Mobile communications (GSM), Enhanced Data rates for GSM Evolution (EDGE), GSM EDGE (GERAN), IEEE 802.16 (i.e., Worldwide Interoperability for Microwave Access (WiMAX)), BlueTooth^{®}, or other technologies.

Some embodiments relate to HE and/or EHT communications. In accordance with some IEEE 802.11 embodiments (e.g., IEEE 802.11ax embodiments) a AP 502 may operate as a master station which may be arranged to contend for a wireless medium (e.g., during a contention period) to receive exclusive control of the medium for an control period. In some embodiments, the control period may be termed a transmission opportunity (TXOP). AP 502 may transmit a master-sync transmission, which may be a trigger frame or control and schedule transmission, at the beginning of the control period. AP 502 may transmit a time duration of TXOP and sub-channel information. During the control period, STAs 504 may communicate with AP 502 in accordance with a non-contention based multiple access technique such as OFDMA or MU-MIMO. This is unlike conventional WLAN communications in which devices communicate in accordance with a contention-based communication technique, rather than a multiple access technique. During the control period, the AP 502 may communicate with STAs 504 using one or more frames. During the control period, the STAs 504 may operate on a sub-channel smaller than the operating range of the AP 502. During the control period, legacy stations refrain from communicating. The legacy stations may need to receive the communication from the AP 502 to defer from communicating.

In accordance with some embodiments, during TXOP the STAs 504 may contend for the wireless medium with the legacy devices 506 being excluded from contending for the wireless medium during the master-sync transmission. In some embodiments the trigger frame may indicate an uplink (UL) UL-MU-MIMO and/or UL OFDMA TXOP. In some embodiments, the trigger frame may include a DL UL-MU-MIMO and/or DL OFDMA with a schedule indicated in a preamble portion of trigger frame.

In some embodiments, the multiple-access technique used during the TXOP may be a scheduled OFDMA technique, although this is not a requirement. In some embodiments, the multiple access technique may be a time-division multiple access (TDMA) technique or a frequency division multiple access (FDMA) technique. In some embodiments, the multiple access technique may be a space-division multiple access (SDMA) technique. In some embodiments, the multiple access technique may be a Code division multiple access (CDMA).

The AP 502 may also communicate with legacy devices 506 and/or non-legacy stations 504 in accordance with legacy IEEE 802.11 communication techniques. In some embodiments, the AP 502 may also be configurable to communicate with STAs 504 outside the TXOP in accordance with legacy IEEE 802.11 communication techniques, although this is not a requirement.

In some embodiments, the station 504 and/or AP 502 may be configured to operate in accordance with IEEE 802.11mc. In example embodiments, the radio architecture of FIG. 1 is configured to implement the station 504 and/or the AP 502. In example embodiments, the front-end module circuitry of FIG. 2 is configured to implement the station 504 and/or the AP 502. In example embodiments, the radio IC circuitry of FIG. 3 is configured to implement the station 504 and/or the AP 502. In example embodiments, the base-band processing circuitry of FIG. 4 is configured to implement the station 504 and/or the AP 502.

In example embodiments, the Stations 504, AP 502, an apparatus of the Stations 504, and/or an apparatus of the AP 502 may include one or more of the following: the radio architecture of FIG. 1, the front-end module circuitry of FIG. 2, the radio IC circuitry of FIG. 3, and/or the base-band processing circuitry of FIG. 4.

In example embodiments, the radio architecture of FIG. 1, the front-end module circuitry of FIG. 2, the radio IC circuitry of FIG. 3, and/or the base-band processing circuitry of FIG. 4 may be configured to perform the methods and operations/functions herein.

In example embodiments, the station 504 and/or the AP 502 are configured to perform the methods and operations/functions described herein. In example embodiments, an apparatus of the station 504 and/or an apparatus of the AP 502 are configured to perform the methods and functions described herein. The term Wi-Fi may refer to one or more of the IEEE 802.11 communication standards. AP and STA may refer to access point 502 and/or station 504 as well as legacy devices 506.

In some embodiments, the AP and STAs may communicate in accordance with one of the IEEE 802.11 standards. IEEE Std 802.11-2020, IEEE P802.11ax/D8.0, October 2020, IEEE P802.11REVmd/D5.0, IEEE P802.11be/D3.0, January 2023 and IEEE P802.11-REVme/D1.3 are incorporated herein by reference in their entireties.

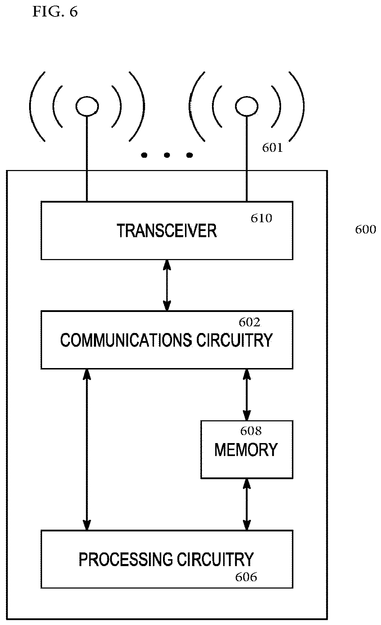

FIG. 6 illustrates a functional block diagram of a wireless communication device, in accordance with some embodiments. In some embodiments, FIG. 6 illustrates a functional block diagram of a communication device (STA) that may be suitable for use as an AP STA, a non-AP STA or other user device in accordance with some embodiments. The wireless communication device 600 may also be suitable for use as a handheld device, a mobile device, a cellular telephone, a smartphone, a tablet, a netbook, a wireless terminal, a laptop computer, a wearable computer device, a femtocell, a high data rate (HDR) subscriber device, an access point, an access terminal, or other personal communication system (PCS) device.

The wireless communication device 600 may include communications circuitry 602 and a transceiver 610 for transmitting and receiving signals to and from other communication devices using one or more antennas 601. The communications circuitry 602 may include circuitry that can operate the physical layer (PHY) communications and/or medium access control (MAC) communications for controlling access to the wireless medium, and/or any other communications layers for transmitting and receiving signals. The wireless communication device 600 may also include processing circuitry 606 and memory 608 arranged to perform the operations described herein. In some embodiments, the communications circuitry 602 and the processing circuitry 606 may be configured to perform operations detailed in the above figures, diagrams, and flows.

In accordance with some embodiments, the communications circuitry 602 may be arranged to contend for a wireless medium and configure frames or packets for communicating over the wireless medium. The communications circuitry 602 may be arranged to transmit and receive signals. The communications circuitry 602 may also include circuitry for modulation/demodulation, upconversion/downconversion, filtering, amplification, etc. In some embodiments, the processing circuitry 606 of the wireless communication device 600 may include one or more processors. In other embodiments, two or more antennas 601 may be coupled to the communications circuitry 602 arranged for sending and receiving signals. The memory 608 may store information for configuring the processing circuitry 606 to perform operations for configuring and transmitting message frames and performing the various operations described herein. The memory 608 may include any type of memory, including non-transitory memory, for storing information in a form readable by a machine (e.g., a computer). For example, the memory 608 may include a computer-readable storage device, read-only memory (ROM), random-access memory (RAM), magnetic disk storage media, optical storage media, flash-memory devices and other storage devices and media.

In some embodiments, the wireless communication device 600 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the wireless communication device 600 may include one or more antennas 601. The antennas 601 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting device.

In some embodiments, the wireless communication device 600 may include one or more of a keyboard, a display, a non-volatile memory port, multiple antennas, a graphics processor, an application processor, speakers, and other mobile device elements. The display may be an LCD screen including a touch screen.

Although the wireless communication device 600 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the wireless communication device 600 may refer to one or more processes operating on one or more processing elements.

In some embodiments, the processing circuitry may include a baseband processor and is configured to store in the memory information related to whether each ISTA is requesting to be polled or is requesting not to be polled. These embodiments are described in more detail below.

The following patent applications are incorporated by reference:
- PCT/US2017/067134, Filed December 18, 2017, Published June 27, 2019 as WO2019/125396, and entitled "ENHANCED TIME SENSITIVE NETWORKING FOR WIRELESS COMMUNICATIONS" [Ref No. AA5687-PCT];
- PCT/US2018/035868, Filed June 4, 2018, Published December 12, 2019 as WO2019/236052, entitled "METHODS AND APPARATUS TO FACILITATE A SYNCHRONOUS TRANSMISSION OPPORTUNITY IN A WIRELESS LOCAL AREA NETWORK" [Ref No. AA8799-PCT];
- US SN 16/870,156, Filed May 8, 2020, Published as US2020-0267636 A1, entitled "EXTREME HIGH THROUGHPUT (EHT) TIME-SENSITIVE NETWORKING" [Ref No. AC2096-US]; and
- US SN 17/824,520, Filed May 25, 2022, entitled "ACCESS POINT CONFIGURED FOR SIGNALING CONFIGURATION AND RESOURCE ALLOCATION INSIDE A SYNCHRONIZED TRANSMISSION OPPORTUNITY (S-TXOP)" [Ref No. AD8034-US].

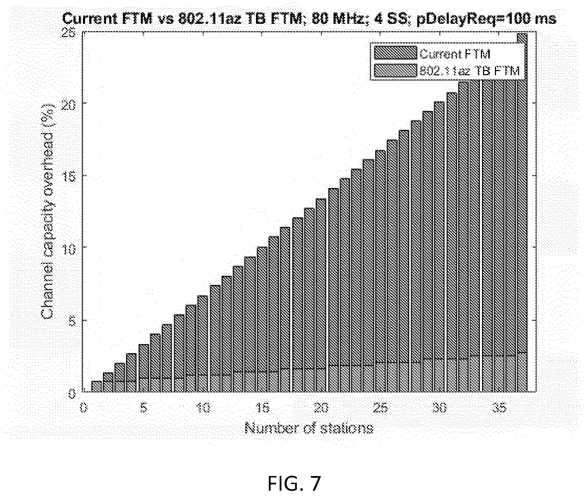

FIG. 7 illustrates overhead signalling savings for networks with more than twenty STAs per BSS, in accordance with some embodiments. Wireless time synchronization requires the implementation of standards such as IEEE 802.1AS. This standard may be implemented over a 802.11 Fine Timing Measurement (FTM) protocol with an accuracy of single digit microseconds (µs) for stations (STA) associated to an access point (AP). The main limitation of this approach is its efficiency, as an individual FTM session between each pair of leader and follower is required to synchronize the devices. This topology is particularly inefficient for larger networks as illustrated in FIG. 7. An alternative solution is the use of a trigger-based (TB) 802.11az FTM protocol resulting in a much more efficient time synchronization protocol implementation as illustrated by in FIG. 7. FIG. 7 shows 802.1AS over 802.11ax FTM vs 802.11az FTM - 80 MHz & 4SS. Up to 9x signaling overhead savings for networks with more than 20 STAs per BSS.

Even though time synchronization using TB 802.11az FTM is clearly beneficial in terms of efficiency, the protocol itself can be further optimized when used for the dual purpose of providing accurate time synchronization and localization. The current 802.11az FTM procedure includes a polling phase that adds overhead, which can be further optimized in cases where devices maintain continuous time synchronization with a reference clock on the network, which is the typical case in TSN-capable networks.

Some embodiments described herein provide new 802.11az negotiation mechanisms to avoid the polling phase in devices that do not require it (e.g., power unconstrained devices that require consistent time synchronization). Some embodiments described herein provide new TB 802.11az negotiation mechanisms to enable 802.11az FTM to be used efficiently for time synchronization and localization for devices and applications with different requirements. These embodiments support networks with devices requiring polling (e.g., in power constrained devices requiring positioning and/or time synchronization) and devices not requiring polling (e.g., power unconstrained devices requiring accurate time synchronization). By using this signaling mechanism disclosed herein, the integration of devices in a wireless network requiring accurate positioning capabilities, time synchronization or both by reducing the signaling overhead required for their support is improved.

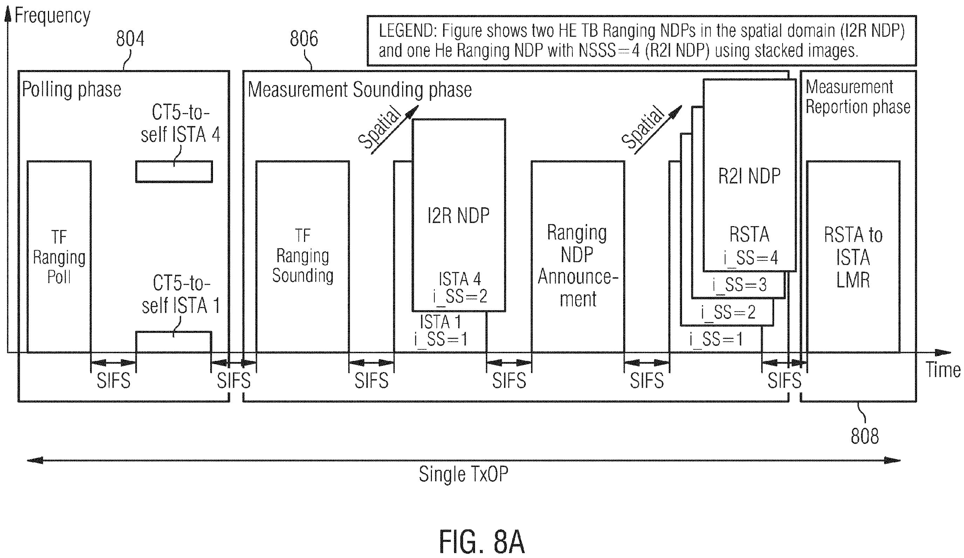

FIG. 8A illustrated trigger-based (TB) polling, sounding and reporting phases, in accordance with some embodiments. An example of the 802.11az FTM protocol is illustrated in FIG. 8A. This protocol include a polling phase 804, a sounding phase 806, and a reporting phase 808. In the polling phase, initiating stations (ISTAs) (e.g., client devices) are asked if they want to participate in the next round of measurements. The subsequent phases perform the measurements of the active ISTAs and report the information back to all involved ISTAs.

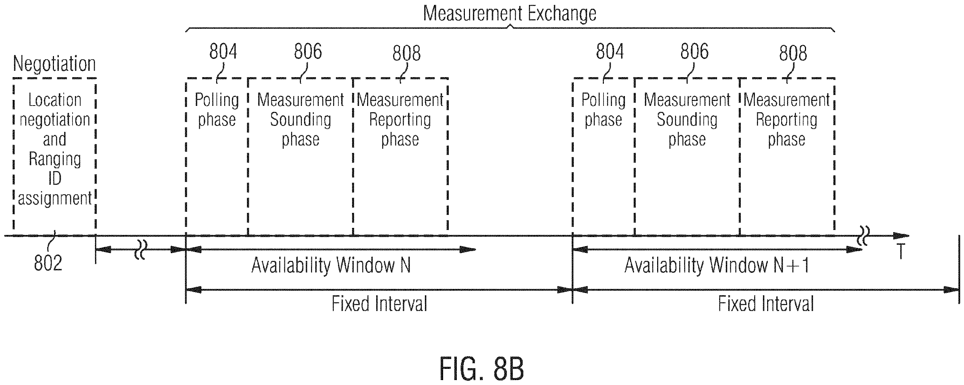

FIG. 8B illustrates a negotiation phase and a measurement phase that includes a TB ranging availability window with two instances of polling/sounding/reporting triplets in separate transmission opportunities (TXOPs), in accordance with some embodiments.

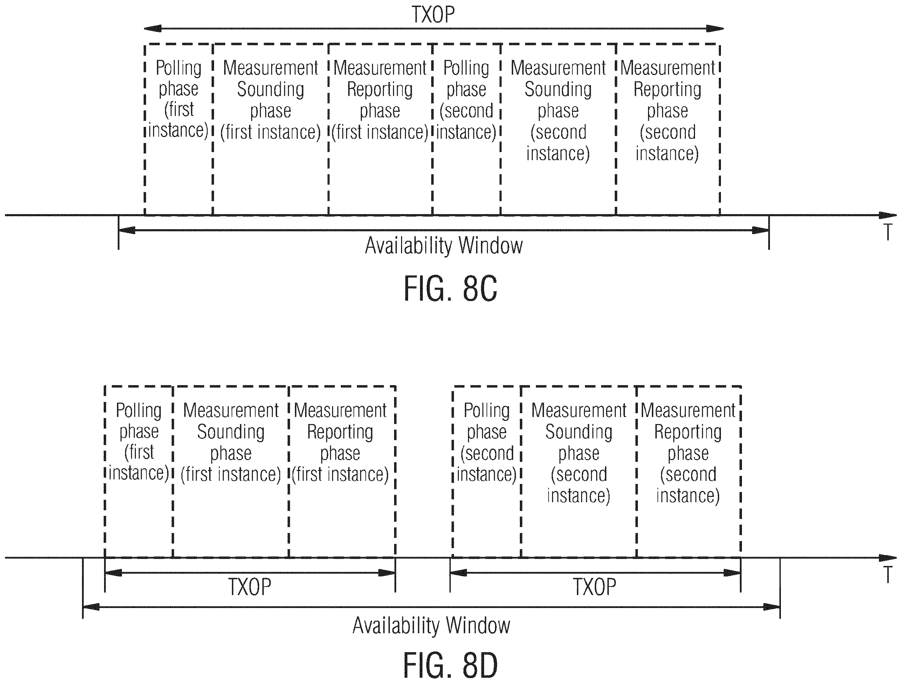

FIG. 8C illustrates a TB ranging availability window with two instances of polling/sounding/reporting triplets in a single TXOP, in accordance with some embodiments.

FIG. 8D illustrates a TB ranging availability window with two instances of polling/sounding/reporting triplets in separate TXOPs, in accordance with some embodiments.

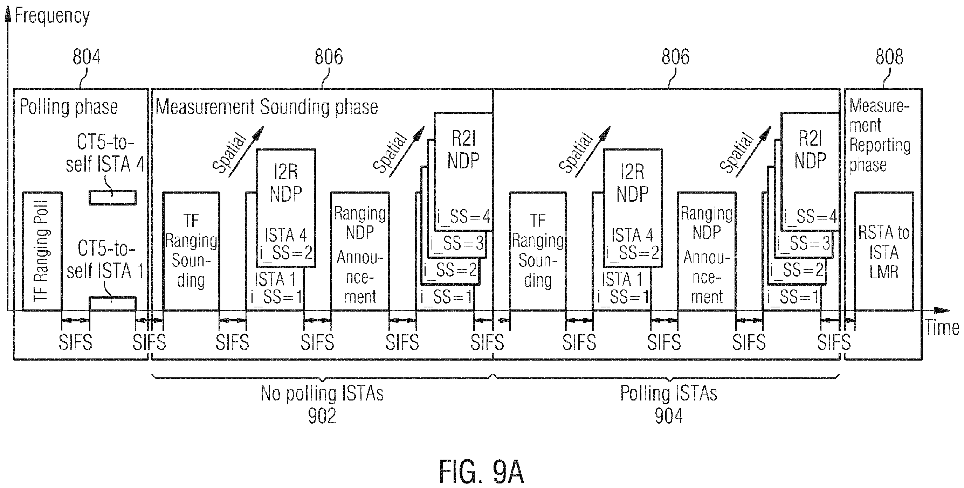

FIG. 9A illustrates trigger-based polling, sounding and reporting phase mixing of polled and non-polled devices, in accordance with some embodiments. Some embodiments described herein divide the measurement phase into two sub-phases. The first measurement sub-phase is reserved for devices not requiring polling (i.e., the are expected to participate in the measurement exchange on a regular basis), and a second measurement sub-phase for devices requiring polling. An example of this is illustrated in FIG. 9A. In FIG. 9A, a trigger-based polling, sounding and reporting phase mixing polled and non-polled devices is illustrated. In this example, 50% of ISTAs are polled and the rest are assumed to be ranging, thus polling phase signaling time is reduced by half.

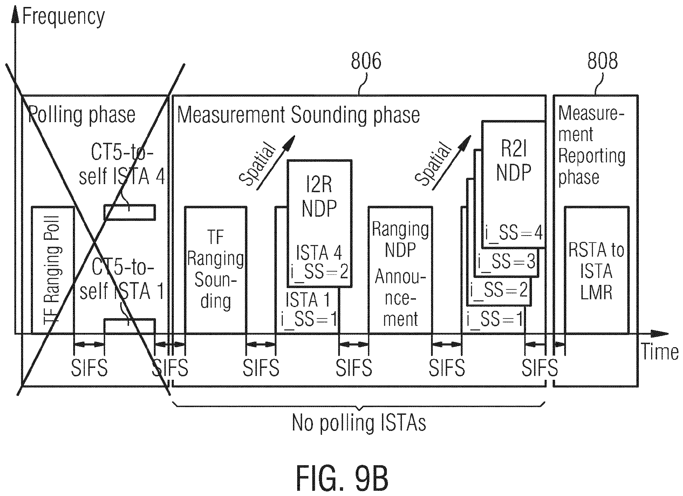

FIG. 9B illustrates trigger-based polling free, sounding and reporting phases for non-polled devices, in accordance with some embodiments. In some embodiments, the measurement phase does not need to have the two-sub-phases. In another embodiment, an RSTA can group ISTAs not requiring polling and directly trigger the measurement phase. By grouping the ISTAs into polling and no-polling groups, further efficiency improvements can be achieved as illustrated in FIG. 9B. FIG. 9B illustrates a trigger-based polling free, sounding and reporting phase for non-polled devices. In this example, polling phase is bypassed, and ranging is directly triggered by the RSTA.

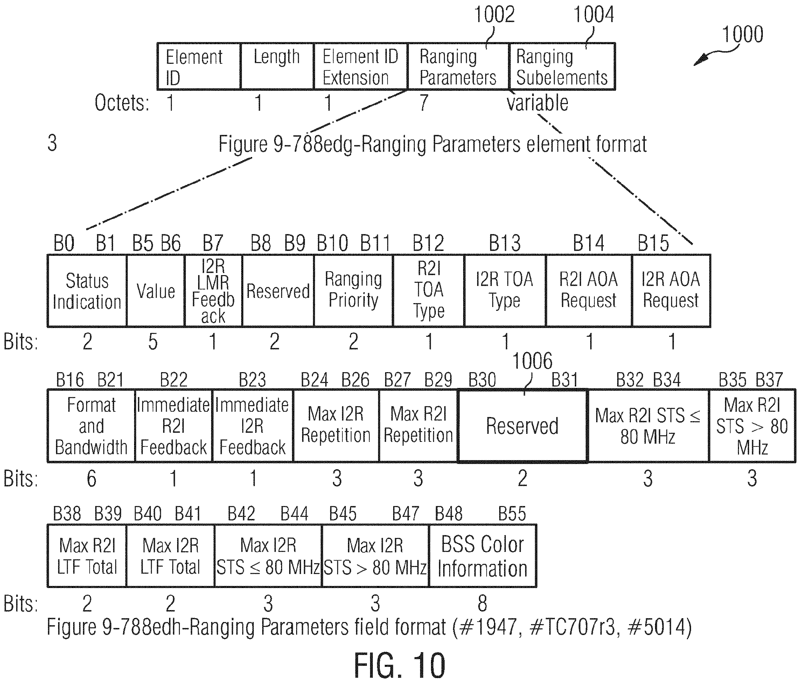

FIG. 10 illustrates a Ranging Parameters Field format, in accordance with some embodiments. To allow the triggering of measurement in no polling ISTA, during the negotiation phase, devices indicate their intent to participate in the measurement and how (i.e., require polling or not). To signal it, some embodiments may use a ranging parameters element 1000 (FIG. 10). Reserved bit B30 1006 in the ranging parameters field 1002 may be used to signal polling (B30=0) or no polling (B30=1). Note that the ranging parameters field 1002 may be used during the negotiation for TB ranging to configure how each ISTA performs ranging in the network. FIG. 10 illustrates a Ranging parameters field format. In some embodiments, B30 may be used to indicate that the ISTA is requesting to be polled or not.

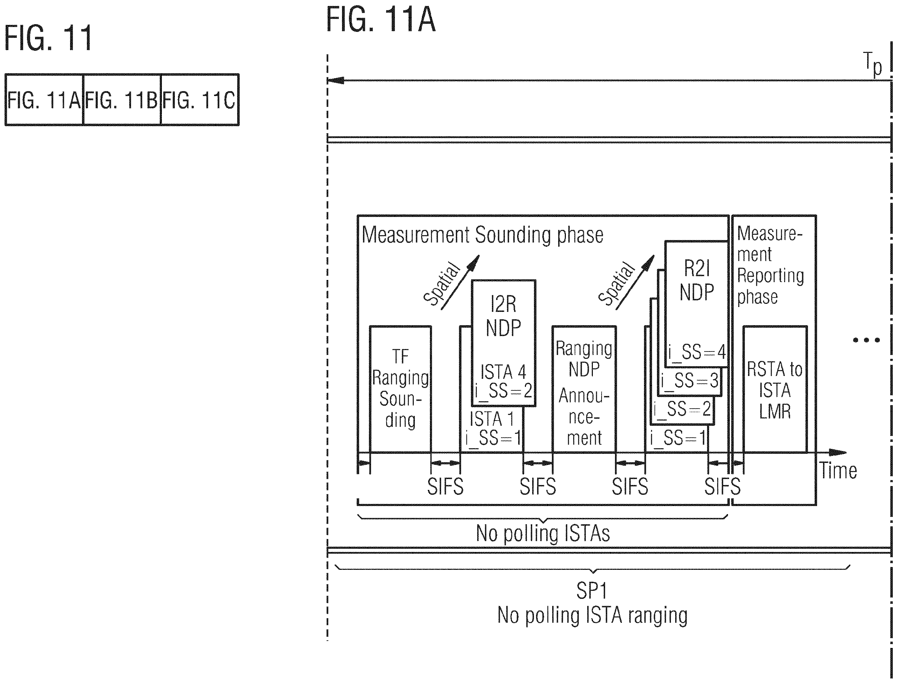

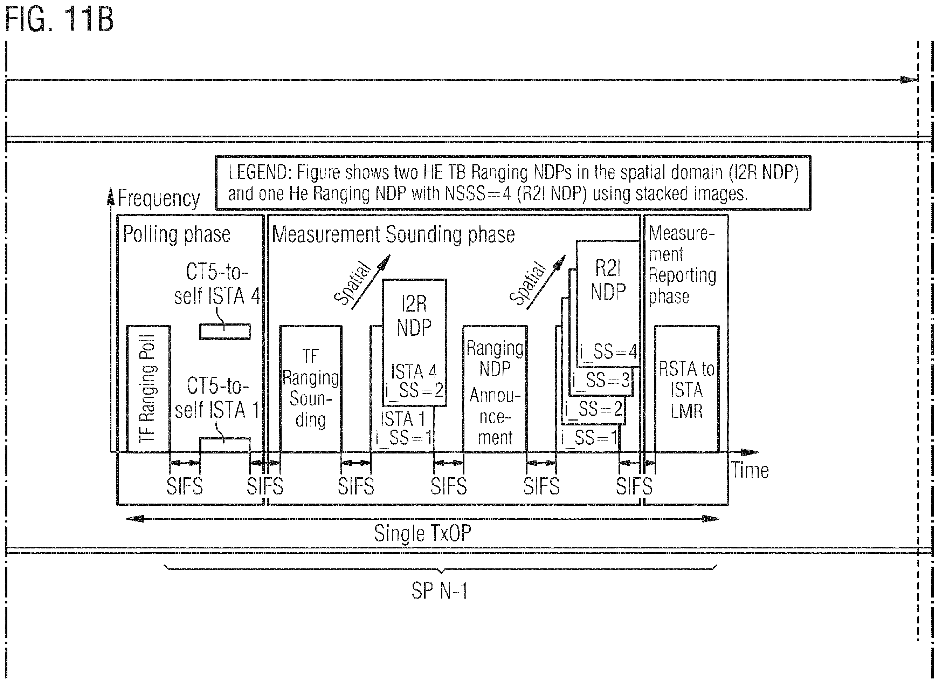

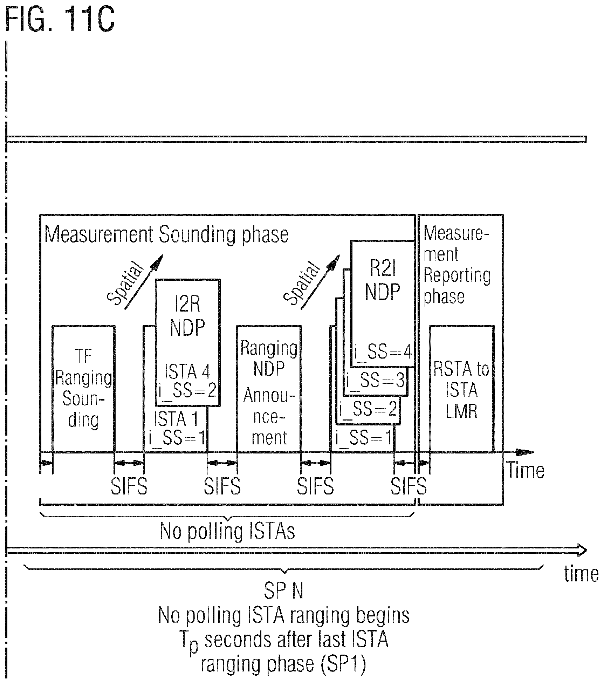

FIG. 11 illustrates periodic non polling ISTA sounding, in accordance with some embodiments. In these embodiments, no polling ISTAs signaling shall affect the way both RSTAs and ISTAs behave. Since no polling phase for these ISTAs is expected, the following behavior can be expected from the RSTAs and ISTAs:
- ISTAs declare during the negotiation phase their intent to participate in the ranging phase in a periodic fashion.
- *Availability Window* bits in the *Ranging Subelements* field is used to set up the periodicity *Tₚ* at which the ISTA would like to be sounded.
- Both the RSTA and ISTAs assume no polling. Thus, failure to a TF sounding is because STA's NAV set or channel loss.
- The ISTA remains available for the entirety of a given availability window unless it has already been served in that window.
- An unassociated ISTA is expected to track the RSTA's beacon (or other Mgt frames e.g., Probe Response) to synchronize its clock with that of the RSTA.

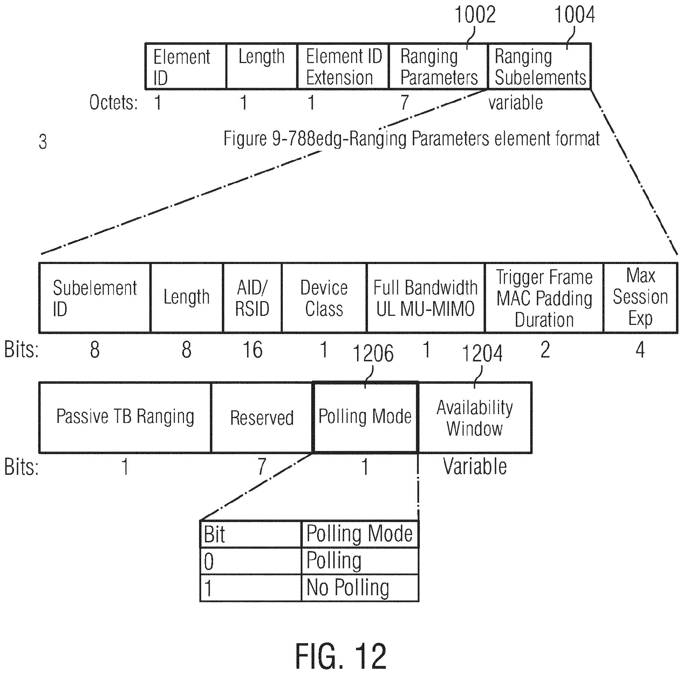

FIG. 11 shows an example of this sounding approach. In FIG. 11, periodic no polling ISTA sounding is illustrated. In this example, a no polling ISTA is sounded in SP N. Sounding happens with a periodicity of *Tₚ* as described in the *Availability Window* bits field 1204 (see FIG. 12) in the *Ranging Subelements* field 1004.

FIG. 12 illustrates a Ranging Subelements field format, in accordance with some embodiments. In some other embodiments, the use of a new field 1206 in the ranging subelement field 1004 to signal the behavior described above may be used. This field may be denoted as *Polling Mode,* and it may be formed by one bit which can signal ISTA's polling modality. The AP may also use this bit to confirm whether the STA will be polled in the negotiated SP or not. FIG. 12 illustrates a Ranging subelements field format that includes a new *Polling Mode* to indicate the ISTA polling modality. In another embodiment, associated STAs may not need to be polled in a negotiated availability window.

Referring to the figures, Some embodiments are directed to a station (STA) configured operating for in a time-synchronized network (TSN). In these embodiments, when operating as a responding STA (RSTA) for time-synchronization of a plurality of initiating STAs (ISTAs), the RSTA may determine, during a negotiation phase 802 (FIG. 8B), whether each of the ISTAs that intend to participate in one or more measurement phases are requesting to be polled or are requesting not to be polled. In these embodiments, for the ISTAs that are requesting to be polled (i.e., polling ISTAs 904 (FIG. 9A)), the RSTA may perform a polling phase 804 prior to performing each of the one or more measurement phases 806. In these embodiments, for the ISTAs that are requesting not to be polled (i.e., no-polling ISTAs 902 (FIG. 9A)), the RSTA may refrain from performing a polling phase prior to performing each of the one or more measurement phases. In these embodiments, the RSTA can directly trigger the measurement phase for ISTAs that are requesting not to be polled. Thus by grouping ISTAs into polling and non-polling groups, efficient improvements are achieved.

In some embodiments, during the negotiation phase 802, for each of the ISTAs that are requesting not to be polled, the RSTA may determine a periodically occurring availability window indicating when an ISTA that is requesting not to be polled is available for performing ranging measurements during a measurement phase. In these embodiments, the RSTA may schedule the ISTAs that are requesting not to be polled for ranging during the periodically occurring availability window.

In some embodiments, during the negotiation phase, the RSTA may decode a bit in a Ranging Parameters element 1000 (see FIG. 10) to determine whether each ISTA is requesting to be polled or whether each ISTA is requesting not to be polled. The RSTA may also decode an Availability Window field 1204 (see FIG. 12) of a Ranging Subelements field 1004 of the Ranging Parameters element 1000 to determine the periodically occurring availability window for each of the ISTAs that are requesting not to be polled. In these embodiments, Availability Window bits in the Ranging Subelements field 1004 may be used to set up the periodicity Tₚ at which an ISTA would like to be sounded.

In some embodiments, the bit in the Ranging Parameters element 1000 is a bit (e.g., B30 1006 (FIG. 10)) in a Ranging Parameters field 1002 of the Ranging Parameters element 1000. An example of this is illustrated in FIG. 10. In some embodiments, the bit in the Ranging Parameters element is a polling-mode bit in new field 1206 (see FIG. 12) in the Ranging Subelements field 1004.

In some embodiments, the measurement phase 806 is a measurement sounding phase and is followed by a measurement reporting phase 808. In these embodiments, for each of the ISTAs that are requesting to be polled, an availability window includes the polling phase, the measurement sounding phase and the measurement reporting phase (examples of which are illustrated in FIG. 8C and FIG. 8D. In these embodiments, for each of the ISTAs that are requesting not to be polled, the periodically occurring availability window includes the measurement sounding phase and the measurement reporting phase and does not include the polling phase.

In some embodiments, the RSTA may configure the availability window for at least some of the ISTAs that are requesting to be polled to overlap with the periodically occurring availability window for at least some of the ISTAs that are requesting not to be polled. In these embodiments, the ISTAs may be scheduled to be perform ranging based on the availability window described in the ranging subelement. Preferably, ranging is performed in the same availability window to increase efficiency. In these embodiments, the more polling/non polling RSTAs that can perform ranging in an availability window, the higher the gains in efficiency that can be achieved.

In some embodiments, for the measurement sounding phase for the ISTAs that are requesting not to be polled (i.e., ISTAs 902 FIG. 9A), the RSTA may encode a ranging sounding trigger frame for transmission to the ISTAs that are requesting not to be polled. In these embodiments, the RSTA may also decode an initiating station to responding station (I2R) null data packet (NDP) from each of the ISTAs that are requesting not to be polled, encode a ranging NDP announcement frame for transmission to the ISTAs that are requesting not to be polled, and encode a responding station to initiating station (R2I) NDP for transmission to each of the ISTAs that are requesting not to be polled. In these embodiments, the measurement reporting phase may include transmission of a link measurement report (LMR) frame from the RSTA to the ISTAs.

In some embodiments, the ISTAs that are requesting to be polled may comprise STAs that are not expected to participate in a measurement exchange for time synchronization on a regular basis. In these embodiments, the ISTAs that are requesting not to be polled may comprise STAs that are expected to participate in a measurement exchange for time synchronization on a regular basis.

In some embodiments, the ISTAs that are requesting to be polled may comprise STAs that are power constrained requiring less accurate time synchronization. In these embodiments, the ISTAs that are requesting not to be polled may comprise STAs that are non-power constrained requiring more accurate time synchronization.

Some embodiments are directed to a non-transitory computer-readable storage medium that stores instructions for execution by processing circuitry of a station (STA) operating as a responding STA (RSTA) for time-synchronization of a plurality of initiating STAs (ISTAs) in a time-synchronized network (TSN),

Some embodiments are directed to a non-access point station (STA). In these embodiments, when operating as an initiating STA (ISTA) in a time-synchronized network (TSN), the ISTA may, during a negotiation phase with a responding STA (RSTA), encode a ranging parameters element to indicate whether or not the ISTA requests to be polled prior to performing each of one or more measurement phases. In these embodiments, when the ISTA has indicated that polling is not requested, the ISTA may encode the ranging parameters element to indicate information for determining a periodically occurring availability window. The ISTA may also refrain from performing a polling phase 804 prior to performing each of the one or more measurement phases 806. In these embodiments, when the ISTA has indicated that polling is requested, the ISTA may be configured to perform a polling phase 804 prior to performing each of the one or more measurement phases 806.

In some embodiments, when the ISTA has indicated that polling is not requested, the ISTA may be configured to remain available for performing measurements during the periodically occurring availability window.

In some embodiments, the ISTA may synchronize its clock based on measurement results determined from the one or more measurement phases. In some embodiments, the ISTA may encode the ranging parameters element to indicate that the ISTA is requesting not to be polled prior to performing each of one or more measurement phases when the ISTA is expected to participate in a measurement exchange for time synchronization on a regular basis. In these embodiments, the ISTA may encode the ranging parameters element to indicate that the ISTA is requesting to be polled prior to performing each of one or more measurement phases when the ISTA is not expected to participate in a measurement exchange for time synchronization on a regular basis.

The Abstract is provided to comply with 37 C.F.R. Section 1.72(b) requiring an abstract that will allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. An apparatus of a station (STA), the apparatus comprising: processing circuitry; and memory, wherein when operating as a responding STA (RSTA) for time-synchronization of a plurality of initiating STAs (ISTAs) in a time-synchronized network (TSN), the processing circuitry is configured to:
determine, during a negotiation phase, whether each of the ISTAs that intend to participate in one or more measurement phases are requesting to be polled or are requesting not to be polled;
wherein for the ISTAs that are requesting to be polled, perform a polling phase prior to performing each of the one or more measurement phases; and
wherein for the ISTAs that are requesting not to be polled, refrain from performing a polling phase prior to performing each of the one or more measurement phases.

2. The apparatus of claim 1, wherein during the negotiation phase, for each of the ISTAs that are requesting not to be polled, the processing circuitry is configured to determine a periodically occurring availability window indicating when an ISTA that is requesting not to be polled is available for performing ranging measurements during a measurement phase, and
wherein the processing circuitry is to schedule the ISTAs that are requesting not to be polled for ranging during the periodically occurring availability window.

3. The apparatus of claim 2, wherein during the negotiation phase, the processing circuitry is configured to:
decode a bit in a Ranging Parameters element to determine whether each ISTA is requesting to be polled or whether each ISTA is requesting not to be polled; and
decode an Availability Window field of a Ranging Subelements field of the Ranging Parameters element to determine the periodically occurring availability window for each of the ISTAs that are requesting not to be polled.

4. The apparatus of claim 3, wherein the bit in the Ranging Parameters element is a bit in a Ranging Parameters field of the Ranging Parameters element.

5. The apparatus of claim 3, wherein the bit in the Ranging Parameters element is a polling-mode bit in the Ranging Subelements field.

6. The apparatus of claim 3, wherein the measurement phase is a measurement sounding phase and is followed by a measurement reporting phase,
wherein for each of the ISTAs that are requesting to be polled, an availability window includes the polling phase, the measurement sounding phase and the measurement reporting phase, and
wherein for each of the ISTAs that are requesting not to be polled, the periodically occurring availability window includes the measurement sounding phase and the measurement reporting phase and does not include the polling phase.

7. The apparatus of claim 6, wherein the processing circuitry is configured to configure the availability window for at least some of the ISTAs that are requesting to be polled to overlap with the periodically occurring availability window for at least some of the ISTAs that are requesting not to be polled.

8. The apparatus of claim 6, wherein for the measurement sounding phase for the ISTAs that are requesting not to be polled, the processing circuitry of the RSTA is configured to:
encode a ranging sounding trigger frame for transmission to the ISTAs that are requesting not to be polled;
decode an initiating station to responding station (I2R) null data packet (NDP) from each of the ISTAs that are requesting not to be polled;
encode a ranging NDP announcement frame for transmission to the ISTAs that are requesting not to be polled; and
encode a responding station to initiating station (R2I) NDP for transmission to each of the ISTAs that are requesting not to be polled, and
wherein the measurement reporting phase includes transmission of a link measurement report (LMR) frame from the RSTA to the ISTAs.

9. The apparatus of claim 3, wherein the ISTAs that are requesting to be polled comprise STAs that are not expected to participate in a measurement exchange for time synchronization on a regular basis, and
wherein the ISTAs that are requesting not to be polled comprise STAs that are expected to participate in a measurement exchange for time synchronization on a regular basis.

10. The apparatus of claim 3, wherein the ISTAs that are requesting to be polled comprise STAs that are power constrained requiring less accurate time synchronization, and
wherein the ISTAs that are requesting not to be polled comprise STAs that are non-power constrained requiring more accurate time synchronization.

11. A non-transitory computer-readable storage medium that stores instructions for execution by processing circuitry station (STA), wherein when operating as a responding STA (RSTA) for time-synchronization of a plurality of initiating STAs (ISTAs) in a time-synchronized network (TSN), the processing circuitry is configured to:
determine, during a negotiation phase, whether each of the ISTAs that intend to participate in one or more measurement phases are requesting to be polled or are requesting not to be polled;
wherein for the ISTAs that are requesting to be polled, perform a polling phase prior to performing each of the one or more measurement phases; and
wherein for the ISTAs that are requesting not to be polled, refrain from performing a polling phase prior to performing each of the one or more measurement phases.

12. The non-transitory computer-readable storage medium of claim 11, wherein during the negotiation phase, for each of the ISTAs that are requesting not to be polled, the processing circuitry is configured to determine a periodically occurring availability window indicating when an ISTA that is requesting not to be polled is available for performing ranging measurements during a measurement phase, and wherein the processing circuitry is to schedule the ISTAs that are requesting not to be polled for ranging during the periodically occurring availability window.

13. The non-transitory computer-readable storage medium of claim 12, wherein during the negotiation phase, the processing circuitry is configured to:
decode a bit in a Ranging Parameters element to determine whether each ISTA is requesting to be polled or whether each ISTA is requesting not to be polled; and
decode an Availability Window field of a Ranging Subelements field of the Ranging Parameters element to determine the periodically occurring availability window for each of the ISTAs that are requesting not to be polled.

14. The non-transitory computer-readable storage medium of claim 13, wherein the bit in the Ranging Parameters element is a bit in a Ranging Parameters field of the Ranging Parameters element.

15. The non-transitory computer-readable storage medium of claim 13, wherein the bit in the Ranging Parameters element is a polling-mode bit in the Ranging Subelements field.
